# EUROPEAN PATENT APPLICATION

(11) **EP 4 712 019 A1**
(43) Date of publication of application: **18.03.2026**
(21) Application number: 24803271.6
(22) Date of filing: 11.03.2024
(51) Int. Cl.: G06T 7/00, G06V 10/96, G06V 10/774

(54) **IMAGE PROCESSING DEVICE, EDGE DEVICE, IMAGE GENERATION METHOD, AND IMAGE GENERATION PROGRAM**

(30) Priority: 10.05.2023 JP 2023078199
(71) Applicant: Konica Minolta, Inc., Tokyo 100-7015 (JP)
(72) Inventor: NAKAO, Nozomi, Tokyo 100-7015 (JP)
(74) Representative: MFG Patentanwälte Meyer-Wildhagen Meggle-Freund Gerhard PartG mbB
(86) International application number: PCT/JP2024/009263
(87) International publication number: WO 2024/232156

(57) **Abstract**

An image processing device (100) is provided with an image augmentation unit (40) that creates, from an infrared detection signal obtained by imaging an object and on the basis of information about the object, expansion images (71-78) for use as training data for machine learning model creation, or for use as input images in object recognition processing by using a machine learning model.

## Description

### [Technical Field]

The present invention relates to an image processing device, an edge device, an image generation method, and an image generation program.

### [Background art]

Conventionally, it has been known to generate an image using a thermal sensor that performs heat detection. For example, a camera using a sensor (this is referred to as a sensor camera). The infrared image generator generates an infrared image by converting infrared rays emitted from an object into an electrical signal. In this case, the thermal sensor camera normalizes the detection signals from the minimum value to the maximum value and assigns the normalized detection signals to luminance signals 0 to 255, to generate an infrared image with a predetermined contrast.

However, the infrared rays to be detection are easily influenced by moisture and easily cause disturbance. In addition, as the distance to the infrared rays increases, the influence of disturbance becomes stronger and noise is more likely to be superimposed. Furthermore, a target to be detected is often not the entire screen but a specific object.

Here, as an invention relating to an infrared image, PTL 1 describes an object detection device (see abstract of PTL 1) wherein "an image preprocessing unit 22 generates inverted image data obtained by performing gradation conversion on captured image data acquired by a far-infrared camera 10. The object identifier 24 performs object identification processing on each of the captured image data and the reversed image data on the basis of a result learned in advance using the training data, thereby outputting an identification result including information on identification of a type of an object in each of the captured image data and the reversed image data and accuracy information indicating reliability of the identification in each of the captured image data and the reversed image data. Then, the image post-processing unit 26 finally identifies the object in the captured image data based on the identification result by the object identifier 24".

In addition, PTL 2 discloses a far-infrared ray image processing device "including: an image information inputter (22a) which takes in image data acquired by a far-infrared camera (10); a histogram generator (22b) which generates a histogram of pixel values included in the image data; a histogram reconstructor (22c) which corrects a frequency of the histogram generated by the histogram generator to a value between upper and lower limit thresholds using the upper and lower limit thresholds; a smoothing processor (22d) which smoothes the histogram based on the corrected histogram and generates image data in which the histogram is smoothed; and a processed image outputter (14a) which outputs the image data processed by the smoothing processor" (refer to the abstract of PTL 2).

### [Prior Art Document]

### [Patent Literature]

[PTL 1]:Japanese Unexamined Patent Publication No. 2021-163222
[PTL 2]:Japanese Unexamined Patent Publication No. 2020-107097

### SUMMARY OF THE INVENTION

### PROBLEM TO BE SOLVED BY THE INVENTION

When an object is recognized from infrared image, the infrared image does not have color information and has less information than a general visible light image. In addition, since the contrast between the object and the background is poor in the infrared image, it is difficult to recognize the object from the background. Furthermore, edges of a ground truth data tend to blur, and noise tends to appear in the image in rainy weather. Therefore, the infrared image is not suitable for detection of an object.

In relation to such a problem, it is an object of the present invention to provide an image processing device, an edge device, an image generation method, and an image generation program that improve the performance of detecting an object in an infrared image.

### [Means for Solving the Problem]

That is, the above-described problems of the present invention are solved by the following configurations.
(1) An image processing device including an image augmentation unit that creates, from a detection signal of infrared rays obtained by imaging a target, an augmented image based on information on the target, wherein the augmented image is used as training data for creating a machine learning model or is used as an input image in recognition processing of the target by the machine learning model.
(2) The image processing device according to (1), in which the target is a solid having a specific temperature.
(3) The image processing device according to (1), in which the information on the target is a temperature range in which a specific target can exist.
(4) The image processing device according to (1), wherein the information on the target is an image area in which a specific target is present.
(5) The image processing device according to (1), wherein the image augmentation unit gives a predetermined contrast to a range of the infrared information in which a specific object may be present in creating the augmented image.
(6) The image processing device according to (1), wherein the image augmentation unit generates a plurality of augmented images each having a different contrast imparted thereto in a range of the infrared information in which a specific object may be present.
(7) The image processing device according to (1), further including: an image generation unit that generates an infrared image from a detection signal of infrared rays obtained by imaging the target; and a specifying unit that specifies an image area in which a specific target exists on the basis of the infrared image, in which the image augmentation unit gives a predetermined contrast to the image area in which the specific target exists when creating the augmented image.
(8) The image processing device according to (7), wherein, when creating the augmented image, the image augmentation unit sets an outside of the image area as a background image and provides the background image with different contrasts.
(9) The image processing device according to (1), further including a learning process unit that performs machine learning using the training data.
(10) The image processing device according to (1), wherein, when generating the input image used in the processing of recognizing the target object, the image augmentation unit provides a predetermined contrast to a range of the infrared information in which a specific target object may exist.
(11) The image processing device according to (7), wherein, when generating the input image to be used in the processing of recognizing the target, the image augmentation unit gives a predetermined contrast to an image area in which a specific target exists.
(12) An edge device including: an inference model machine-learned by an image processing device including an image augmentation unit that creates, from a detection signal of infrared rays used to image a target, an augmented image based on information on the target, wherein the augmented image is used as training data for creating a machine learning model or is used as an input image in recognition processing for the target by the machine learning model, and a learning process unit that performs machine learning using the training data; and an inference process unit that infers the target by applying the augmented image created by the image augmentation unit to the inference model.
(13) An image generation method including: creating, from a detection signal of infrared rays used to image a target an augmented image based on information on the target, wherein the augmented image is used as training data for creation of a machine learning model or is used as an input image in recognition processing of the target by the machine learning model.
(14) An image generation program for causing a computer to execute the sequence of: creating, from a detection signal of infrared rays used to image a target, an augmented image based on information on the target, wherein the augmented image is used as training data for creation of a machine learning model or is used as an input image in recognition processing of the target by the machine learning model.

### [Effect of the Invention]

According to the present invention, it is possible to improve the performance of detecting an object in an infrared image.

### [Brief Description of the Drawings]

[Fig 1] Fig. 1 is a functional block diagram illustrating functions of an image processing device according to a first embodiment.
[Fig 2] Fig. 2 is a functional block diagram illustrating functions of an image processing device according to a second embodiment.
[Fig 3] Fig. 3 is a functional block diagram illustrating functions of an image processing device according to a third embodiment.
[Fig 4] Fig. 4 is a block diagram illustrating a concept of performing one or both of a learning process and an inference process.
[Fig 5] Fig. 5 is an explanatory diagram which illustrates a schematic hardware configuration of the image processing device according to the present embodiment.
[Fig 6] Fig. 6 is an explanatory diagram illustrating a schematic hardware configuration of an edge device according to the present embodiment.
[Fig 7A] Fig. 7A is an explanatory diagram illustrating a concept in which the image processing device according to the first embodiment creates, from an infrared image obtained by imaging a target, an augmented image to be used as training data for creating a machine learning model, based on information on the target (part 1).
[Fig 7B] Fig. 7B is an explanatory diagram illustrating a concept that the image processing device according to the first embodiment creates, from an infrared image capturing a target and based on information on the target, an augmented image to be used as training data for creating a machine learning model (part 2).
[Fig 7C] Fig. 7C is an explanatory diagram illustrating a concept in which the image processing device according to the first embodiment creates, from an infrared image obtained by imaging a target, an augmented image to be used as training data for creating a machine learning model, on the basis of information on the target (part 3).
[Fig 7D] Fig. 7D is an explanatory diagram illustrating a concept in which the image processing device according to the first embodiment creates, based on information on a target, an augmented image to be used as training data for creating a machine learning model, from an infrared image obtained by imaging the target (part 4).
[Fig 7E] Fig. 7E is an explanatory diagram illustrating a concept in which the image processing device according to the first embodiment creates, from an infrared image obtained by imaging a target, an augmented image to be used as training data for creating a machine learning model, on the basis of information on the target (part 5).
[Fig 7F] Fig. 7F is an explanatory diagram illustrating a concept in which the image processing device according to the first embodiment creates, from an infrared image obtained by imaging a target, an augmented image to be used as training data for creating a machine learning model, based on information on the target (part 6).
[Fig 7G] Fig. 7G is an explanatory diagram illustrating a concept in which the image processing device according to the first embodiment creates, based on information on a target, an augmented image to be used as training data for creating a machine learning model, from an infrared image obtained by imaging the target (part 7).
[Fig 7H] Fig. 7H is an explanatory diagram illustrating a concept that the image processing device according to the first embodiment creates, from an infrared image capturing a target and based on information on the target, an augmented image to be used as training data for creating a machine learning model (part 8).
[Fig 7I] Fig. 7I is a diagram illustrating a concept when a temperature range is set as a parameter with a human being as a target.
[Fig 8A] Fig. 8A is an explanatory diagram illustrating a concept in which the image processing device according to the second embodiment creates an augmented image to be used as an input image in processing for recognizing an object by a machine learning model (part 1).
[Fig 8B] Fig. 8B is an explanatory diagram illustrating the concept of creating, by the image processing device according to the second embodiment, an augmented image to be used as an input image in target object recognition processing by a machine learning model (part 2).
[Fig 8C] FIG. 8C is an explanatory diagram showing a concept in which the image processing device according to the second embodiment creates an augmented image to be used as an input image in a recognition process of a target object by a machine learning model (part 3).
[Fig 8D] Fig. 8D is an explanatory diagram illustrating a concept in which the image processing device according to the second embodiment creates an augmented image to be used as an input image in processing for recognizing an object by a machine learning model (part 4).
[FIG. 8E] FIG. 8E is a diagram showing a concept when a temperature range is set as a parameter outdoors in summer for target vehicles.
[Fig 9A] Fig. 9A is an explanatory diagram illustrating the concept of creating, by the image processing device according to the second embodiment, an augmented image to be used as an input image in processing for recognizing an object by a machine learning model (part 5).
[Fig 9B] Fig. 9B is an explanatory diagram illustrating the concept that the image processing device according to the second embodiment creates an augmented image to be used as an input image in processing for recognizing a target object by a machine learning model (part 6).
[Fig 9C] 9C is an explanatory diagram illustrating a concept in which the image processing device according to the second embodiment creates an augmented image to be used as an input image in processing for recognizing an object by a machine learning model (part 7).
[Fig 9D] Fig. 9D is an explanatory diagram illustrating a concept in which the image processing device according to the second embodiment creates an augmented image to be used as an input image in processing for recognizing an object by a machine learning model (part 8).
[Fig 9E] Fig. 9E is a diagram illustrating a concept when a temperature range is set as a parameter outdoors in winter for target vehicles.
[Fig. 10A] Fig. 10A illustrates an infrared image in which a high-temperature device that is an object is displayed in an area indoors.
[Fig. 10B] Fig. 10B illustrates a histogram of the infrared image illustrated in Fig.10A.
[Fig. 10C] Fig. 10C illustrates an augmented image obtained by normalizing the target range of the temperature of the infrared image illustrated in Fig. 10A from about 20 [°C] to about 50 [°C].
[Fig. 10D] FIG. 10D illustrates a histogram in which the target range of the temperature illustrated in Fig. 10B is normalized from about 18 [°C] to about 55 [°C].
[Fig. 11A] Fig. 11A illustrates an infrared image in which a high-temperature portion of a vehicle as an object is displayed in an area outdoors.
[Fig. 11B] Fig. 11B illustrates a histogram of the infrared image illustrated in Fig. 11A.
[Fig. 11C] Fig. 11C illustrates an augmented image obtained by normalizing the target range of the temperature of the infrared image in Fig.11A from about 30 [°C] to about 42 [°C].
[Fig. 11D] FIG. 11D illustrates a histogram in which the target range of the temperature illustrated in Fig. 11B is normalized from about 30 [°C] to about 44 [°C].
[Fig. 12A] Fig. 12A illustrates an infrared image in which a high-temperature portion of a vehicle, which is an object, is displayed in an area in a cold outdoor environment.
[Fig. 12B] Fig. 12B illustrates a histogram of the infrared image illustrated in Fig. 12A.
[Fig. 12C] Fig. 12C illustrates an augmented image obtained by normalizing the target range of the temperature of the infrared image illustrated in Fig. 12A from about 10 [°C] to about 31 [°C].
[Fig. 12D] FIG. 12D illustrates a histogram in which the target range of the temperature illustrated in Fig. 12B is normalized from about 9 [°C] to about 33 [°C].
[Fig. 13A] Fig. 13A is an explanatory diagram illustrating an example in which an image augmentation unit of the image processing device according to the third embodiment generates, in a rectangle, an infrared image with contrast in an image area in which a particular target object exists (part 1).
[Fig. 13B] Fig. 13B is an explanatory diagram illustrating an example in which the image augmentation unit of the image processing device according to the third embodiment generates, in a rectangle, an infrared image with contrast in an image area in which a particular target object exists (part 2).
[Fig. 13C] Fig. 13C is an explanatory diagram illustrating an example in which the image augmentation unit of the image processing device according to the third embodiment generates, in a rectangle, an infrared image with contrast in an image area in which a particular target object exists (part 3).

### EMBODIMENT OF THE INVENTION

Hereinafter, embodiments for carrying out the present invention will be described in detail. Note that the embodiment described below is an example for realizing the present invention, and should be appropriately modified or changed depending on the configuration of an apparatus to which the present invention is applied and various conditions, and the present invention is not limited to the following embodiment.

### <First Embodiment >

### [Overall Configuration of Image processing device]

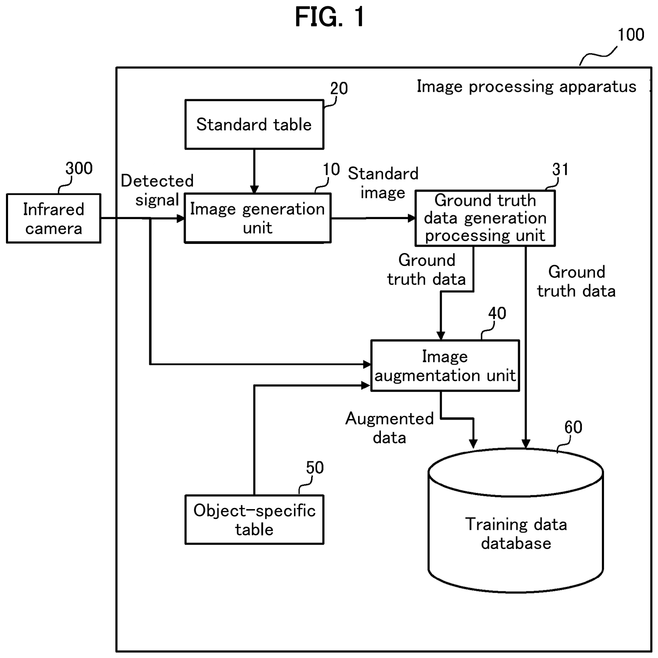

FIG. 1 is a functional block diagram showing functions of an image processing device 100 according to the first embodiment. The image processing device 100 is an apparatus that generates and processes an infrared image, and is connected to the infrared camera 300. Note that the image processing device 100 according to the first embodiment processes an infrared image aiming at an object to be learned, and generates a combination of an augmented image and ground truth data to be used for machine learning.

The infrared camera 300 is a camera for visualizing infrared rays emitted from an object. The infrared camera 300 detects the temperature of a target as a detection signal of infrared rays, and sends it to the image processing device 100.

The image processing device 100 includes an image generation unit 10, a standard table 20, an image augmentation unit 40, a ground truth data generation processing unit 31 (identification unit), an object-specific table 50, and a training data database 60.

The image generation unit 10 generates an infrared image (hereinafter, also referred to as a standard image) on the basis of the detection signal of infrared rays acquired from the infrared camera 300 while referring to the standard table 20. That is, the image generation unit 10 can generate an infrared image from a detection signal of infrared rays obtained by imaging an object with the infrared camera 300.

The standard table 20 stores parameters to be referred to when the image generation unit 10 generates a standard image.

The ground truth data generation processing unit 31 performs object recognition processing on the generated infrared image to perform object detection. The ground truth data generation processing unit 31 sets a label of the detection target object to the generated infrared image. In this case, the ground truth data generation processing unit 31 sets the label as the ground truth data to the object of the infrared image.

The ground truth data generation processing unit 31 (identifying unit) can also set a rectangle indicating the area of the detection object. In this case, the rectangle indicating the area of the target is set in an image area in which a specific target exists. The ground truth data generation processing unit 31 may manually or automatically set the label and the rectangle. Accordingly, the ground truth data generation processing unit 31 can specify an image area in which a specific target object is present based on the infrared image generated by the image generation unit 10.

When used at the time of machine learning, the image augmentation unit 40 according to the first embodiment creates an augmented image to be used as training data for creating a machine learning model, based on the information on the target object in the object-specific table 50, from the detection signal of the infrared rays used to image the target object.

When creating an augmented image, the image augmentation unit 40 imparts a predetermined contrast to a range of infrared information in which a specific object can exist. Here, the image augmentation unit 40 provides a predetermined contrast by assigning the range of the infrared information in which a specific object may exist to a predetermined luminance range (e.g., from 32 to 233). In a case where the specific object is a person, the range of the infrared information in which the person may be present refers to, for example, infrared information corresponding to a range of 10°C to 40°C. In a case where the specific object is a vehicle, the range of the infrared information in which the vehicle may be present refers to, for example, infrared information corresponding to a range of 10°C to 70°C. Thus, the appearance level of the target can be emphasized, thereby improving the performance of detecting the target by the machine learning model.

Furthermore, when generating the augmented image, the image augmentation unit 40 may generate a plurality of augmented images in which different contrasts are given to the range of the infrared information in which the specific object may exist. Here, the image augmentation unit 40 assigns the range of the infrared information in which the specific target object can exist to a plurality of luminance ranges (for example, from 32 to 223 and from 64 to 191), thereby giving different contrasts.

Thus, the image augmentation unit 40 can generate a plurality of augmented images in which the target is emphasized in stages. For example, in a case where the target is a vehicle, it is possible to expand variations of images corresponding to daytime and nighttime and fine weather and stormy weather. By performing machine learning on the plurality of augmented images, it is possible to improve the performance of detecting a target.

Further, when creating the augmented image, the image augmentation unit 40 may give a predetermined contrast to an image area where a specific object exists. That is, the image augmentation unit 40 acquires the minimum value and the maximum value of the detection signal of the image area in which the specific target object exists, assigns the minimum value of the detection signal to 0 of the luminance signal, and assigns the maximum value of the detection signal to 255 of the luminance signal. Thus, data augmentation aimed at the target object is enabled.

Furthermore, the image augmentation unit 40 may set the outside of an image area in which a specific object exists as a background image, and may impart different contrasts to the background image. That is, the image augmentation unit 40 acquires the maximum value and the minimum value of the detection signal of the background image, assigns the minimum value of the detection signal to 64 of the luminance signal, and assigns the maximum value of the detection signal to 191 of the luminance signal. Further, the image augmentation unit 40 may add a predetermined noise when creating the augmented image. Thus, the robustness of the machine learning model that has learned the augmented image can be improved.

The object-specific table 50 stores parameters to be referred to when the image augmentation unit 40 generates an augmented image. The parameters include, for example, information on the temperature of the target and temperature information on the climate and the season when the augmented image is generated. Specifically, the target-specific table 50 corresponds to a temperature range as processing for emphasizing a target object or processing for enhancing a variation. The target object may be a living thing such as a person or an animal, or may be an object (solid) having a specific temperature such as a vehicle.

In the present embodiment, a plurality of augmented images to which different contrasts are given are generated in a range of infrared information in which a specific object may exist. This is to reduce the cost of data collection and to increase variations in a pseudo manner by image processing even in a situation in which imaging cannot be actually performed. Thus, the robustness can be increased so that the machine learning model can make an inference with higher performance.

Further, in the present embodiment, the input image is processed so that the machine learning model can easily detect the target of interest by applying a predetermined contrast to a predetermined temperature range of the infrared image.

### <Second Embodiment >

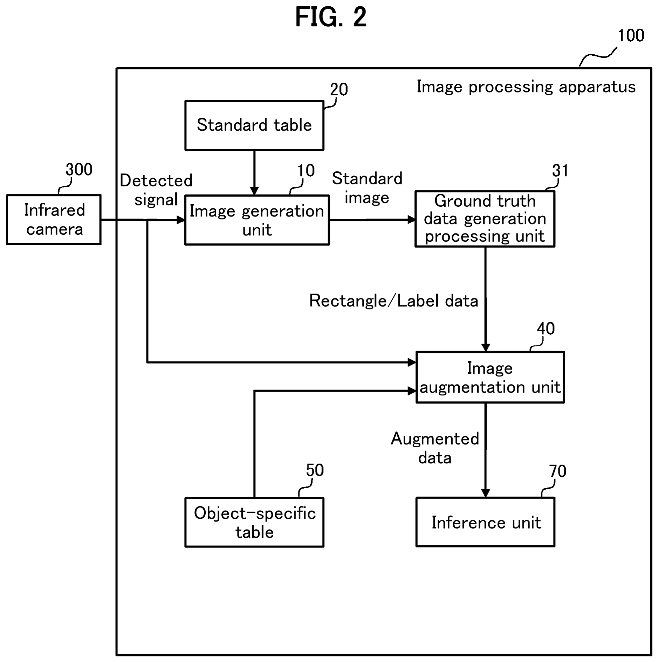

FIG. 2 is a functional block diagram showing functions of the image processing device 100 according to the second embodiment. The image processing device 100 of the second embodiment is different from the image processing device 100 of the first embodiment in that the function of the image augmentation unit 40 is different, an inference unit 70 is provided instead of the training data database 60, and the ground truth data generation processing unit 31 outputs a rectangle indicating the image area of the target object and label data indicating information of the target object.

Since other configurations are the same as those of the first embodiment, the description thereof will be omitted. Note that the second embodiment is intended to perform more optimal image creation and improve inference ability even in a scene which is weak in terms of the characteristics of infrared rays.

The image augmentation unit 40 according to the second embodiment outputs the generated augmented image to the inference unit 70. The inference unit 70 executes recognition processing of an object by a machine learning model using the augmented image as an input image.

The image augmentation unit 40 imparts a predetermined contrast to the range of infrared information where a specific object can exist when the image augmentation unit 40 generates an input image the inference unit 70 uses to recognize the object. Furthermore, when the image augmentation unit 40 generates an input image to be used by the inference unit 70 in processing for recognizing an object, the image augmentation unit 40 may give a predetermined contrast to an image area in which a specific object exists.

The ground truth data generation processing unit 31 according to the second embodiment outputs label data as ground truth data indicating a target object. In addition, the ground truth data generation processing unit 31 outputs a rectangle indicating the image area of the target object.

The image augmentation unit 40 may perform processing for sharpening the image in the specific rectangle. In addition, when the infrared camera 300 captures an image, a rectangle may be generated using a result of object recognition processing which is obtained based on a visible light image captured at the same time by a visible light camera (not illustrated).

The image augmentation unit 40 refers to the object-specific table 50 based on the detection signal from the infrared camera 300 and the rectangle information from the ground truth data generation processing unit 31, and generates an input image with contrast. Thus, the image augmentation unit 40 can sharpen the input image.

Therefore, when generating an input image to be used in processing for recognizing a target, the image augmentation unit 40 can add a predetermined contrast to a range of infrared information in which a specific target can exist. Furthermore, when generating the input image to be used in the processing for recognizing the target, the image augmentation unit 40 may give a predetermined contrast to an image area in which the specific target exists. Furthermore, the image augmentation unit 40 may thin out information in a range of infrared information in which no particular object can exist. Specifically, the image augmentation unit 40 may thin out information of a temperature range in which the specific target object cannot exist.

The inference unit 70 makes an inference using the input image generated by the image augmentation unit 40. Thus, the image augmentation unit 40 performs more optimal image creation even in a scene which is weak in terms of the characteristics of infrared rays, so that the inference ability of the inference unit 70 can be improved.

### <Third embodiment>

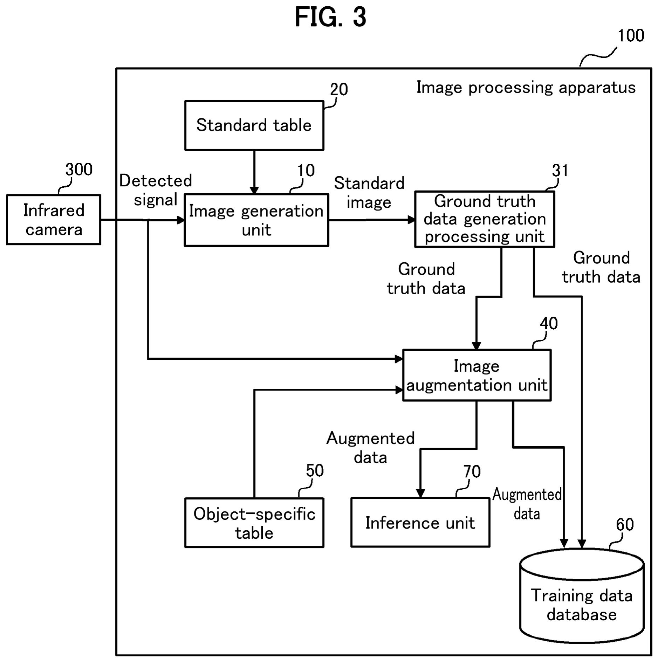

FIG. 3 is a functional block diagram showing functions of the image processing device 100 according to the third embodiment. The image processing device 100 according to the third embodiment is an apparatus having the function at the time of machine learning according to the first embodiment and the function at the time of inference according to the second embodiment, and includes a ground truth data generation processing unit 31, an image augmentation unit 40, a training data database 60, and an inference unit 70.

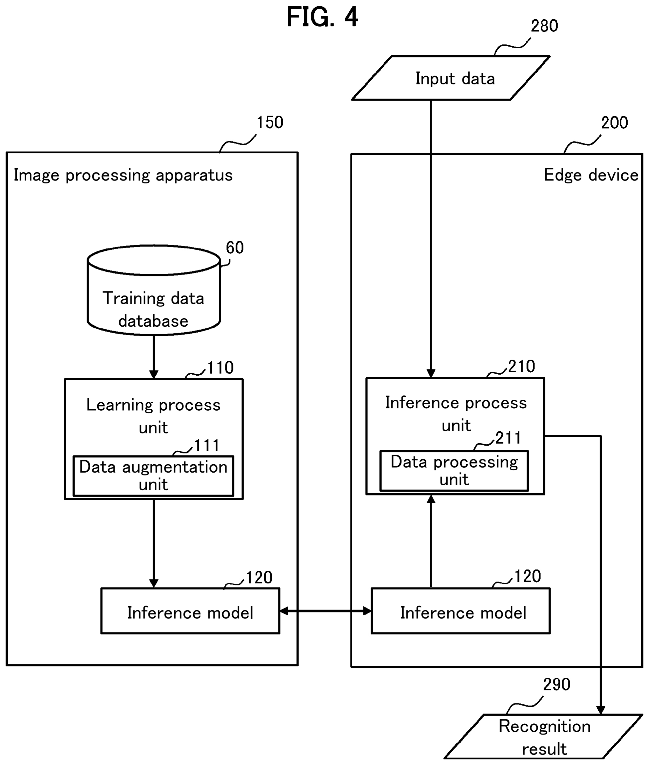

Fig. 4 is a block diagram illustrating a concept of performing one or both of a learning process and an inference process.

As shown in FIG. 4, by providing the image processing device 150 and the edge device 200, it is possible to realize a function equivalent to that of the image processing device 100 shown in FIG. 3. The image processing device 150 includes the training data database 60, a learning process unit 110, and an inference model 120. The learning process unit 110 includes a data augmentation unit 111.

The learning process unit 110 performs machine learning by using training data (for example, a standard image or an augmented image) stored in the training data database 60.

The data augmentation unit 111 expands the variation of the training data in order to improve the robustness of the inference model. That is, the data augmentation unit 111 generates the augmented image (variation image) from the standard image by the function illustrated in the image augmentation unit 40 in Fig. 1. Thus, the learning process unit 110 can perform machine learning while increasing the number of variations of infrared images in a pseudo manner.

The inference model 120 is a result of machine learning of the augmented image and the variation image in the learning process unit 110. By applying the inference model 120 to the inference process unit 210 of the edge device 200, it is possible to detect the target object in a state where the performance of the machine learning model is improved.

The edge device 200 includes an inference process unit 210 and an inference model 120. The inference process unit 210 includes a data processing unit 211.

The inference process unit 210 performs inference on the input data 280 using the inference model 120.

The data processing unit 211 performs processing on the input image in order to perform detection of the target object with higher performance in the data processing unit 211. That is, the data processing unit 211 generates a contrasted input image for the input data 280 by the function illustrated in the image augmentation unit 40 in Fig. 2. Thus, the inference process unit 210 can lower the degree of difficulty in recognizing the target and improve the recognition performance. Therefore, the inference process unit 210 can improve the recognition result 290.

The inference process unit 210 may detect the movement of a target based on the position of a label or a rectangle in the input data 280. For example, the inference process unit 210 can output, as the authentication result 290, the movement direction when the target object moves from the right to the left in the input data 280.

### [Hardware Configuration of image processing device]

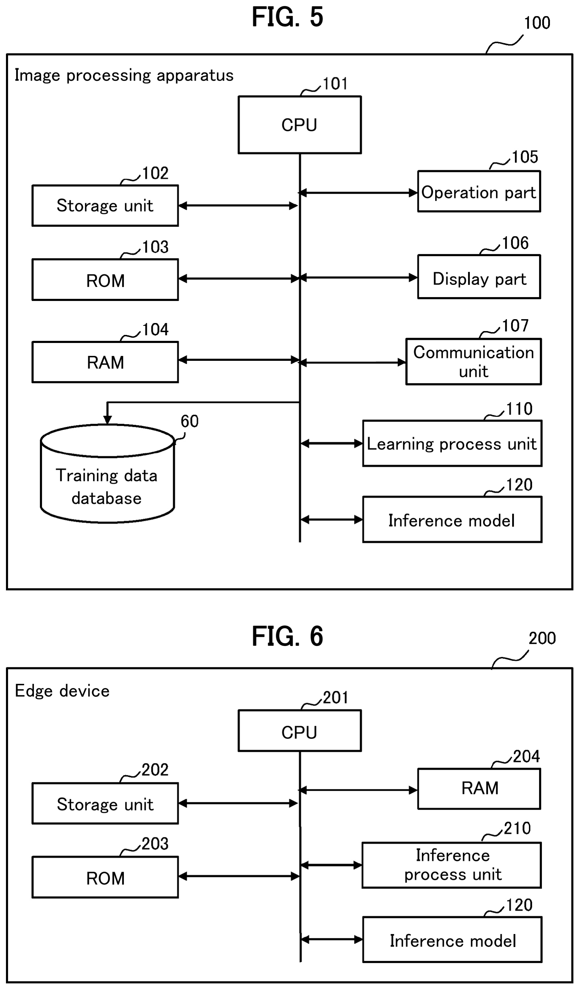

Fig. 5 is an explanatory diagram which illustrates a schematic hardware configuration of the image processing device 100 according to the present embodiment.

The image processing device 100 includes a central processing unit (CPU) 101, a storage unit 102, a read only memory (ROM) 103, a random access memory (RAM) 104, an operation part 105, a display part 106, a communication unit 107, the training data database 60, a learning process unit 110, and an inference model 120.

The CPU101 implements the learning process unit 110 and the inference model 120 and controls the overall operation of the image processing device 100 by reading and executing the program from the storage unit 102 or the ROM103. At this time, various kinds of data stored in a storage unit 102 are referred to. The storage unit 102 is constituted by a large-capacity storage medium such as a semiconductor memory or a hard disk drive, and constitutes the standard table 20 and the object-specific table 50.

The CPU101 transmits and receives various kinds of information to and from an external apparatus connected to a communication network such as a local area network (LAN) or a wide area network (WAN) via the communication unit 107. The CPU101 receives, for example, the detection signal transmitted from the infrared camera 300, and generates an infrared image by the image generation unit 10 on the basis of the detection signal (see Fig. 1).

The communication unit 107 is constituted by a communication control card such as a network interface card (NIC).

The operation part 105 includes various operation keys such as a numeric keypad and a start key. The operation part 105 receives various input operations by the user and outputs an operation signal to the CPU101.

The display part 106 is, for example, a liquid crystal display, and displays characters, figures, images, and the like.

### [Hardware Configuration of Edge Device]

Fig. 6 is an explanatory diagram illustrating a schematic hardware configuration of the edge device 200 according to the present embodiment.

The edge devices 200 each include a CPU201, a storage unit 202, a ROM203, a RAM204, an inference process unit 210, and an inference model 120.

The CPU201 reads the program from the storage unit 202 or the ROM203 and executes the program, thereby embodying the inference process unit 210 and the inference model 120 and controlling the overall operation of the edge devices 200. The inference model 120 of the image processing device 100 illustrated in FIGS. 4 and 5 is applied to the inference model 120 of the edge device 200, and various data stored in the storage unit 202 is referred to. The storage unit 202 is constituted by, for example, a large-capacity storage medium such as a semiconductor memory or a hard disk drive, and constitutes the object-specific table 50.

### <Operation in Each Embodiment >

### [During Machine Learning of Image processing device (First Embodiment)]

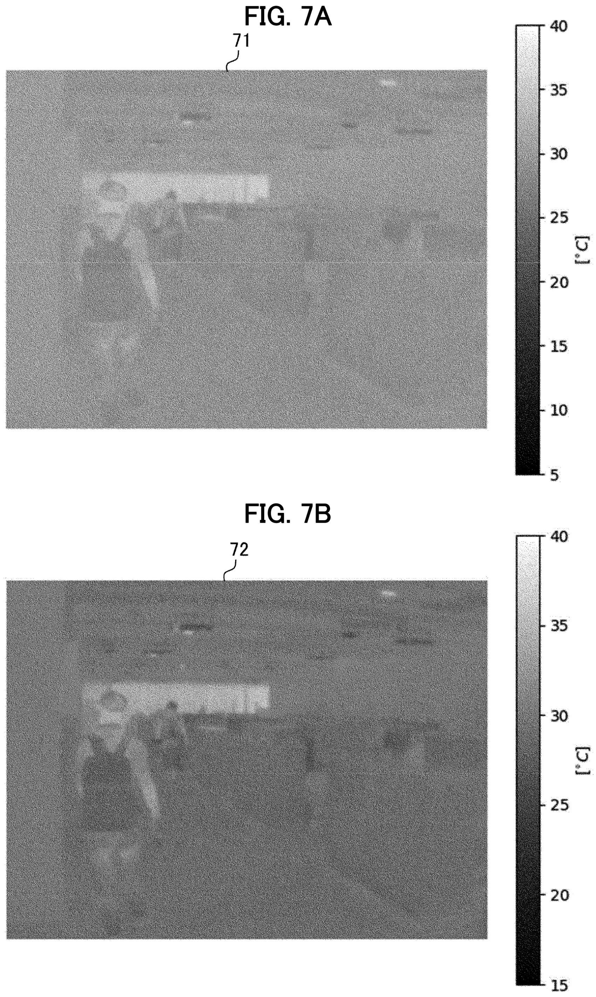

Next, processing performed by the image augmentation unit 40 of the image processing device 100 according to the first embodiment will be described. Figs. 7A to 7H are explanatory diagrams illustrating the concept of the image processing device 100 according to the first embodiment creating, from an infrared image of an object captured by the infrared camera 300 and based on information on the object, an augmented image to be used as training data for creating a machine learning model.

The image augmentation unit 40 of the image processing device 100 refers to the object-specific table 50 to change the target range including the important range, and generates eight augmented images from a predetermined infrared rays detection signal. That is, the image augmentation unit 40 changes the dynamic range to generate an augmented image in which the range in which the target can be expressed in black and white is changed.

The image augmentation unit 40 sets, from the object-specific table 50, the temperature range of 31 [°C] to 41 [°C], which corresponds to body temperature, for example, for a human being that is a warm-blooded animal, as the important range 79. Next, the image augmentation unit 40 generates the eight augmented images 71 to 78 including the temperature range from 31 [°C] to 41 [°C] as the important range.

Fig. 7A illustrates the augmented image 71 generated with the temperature parameter set in the range of 5 [°C] to 40 [°C]. The image augmentation unit 40 assigns a luminance value of 0 to a pixel having an infrared rays detection signal of 5 [°C] or lower, and assigns a luminance value of 255 to a pixel having an infrared rays detection signal of 40 [°C] or higher. The image augmentation unit 40 then assigns luminance values to the pixels corresponding to the infrared rays detection signals ranging from 5 [°C] to 40 [°C] in a proportional manner.

FIG. 7B illustrates an augmented image 72 generated by setting the temperature parameter in the range of 15 [°C] to 40 [°C]. The image augmentation unit 40 assigns a luminance value of 0 to a pixel having an infrared rays detection signal of 15 [°C] or lower, and assigns a luminance value of 255 to a pixel having an infrared rays detection signal of 40 [°C] or higher. The image augmentation unit 40 then assigns the luminance value to the pixels corresponding to the infrared rays detection signals between 15 [°C] and 40 [°C] in a proportional manner.

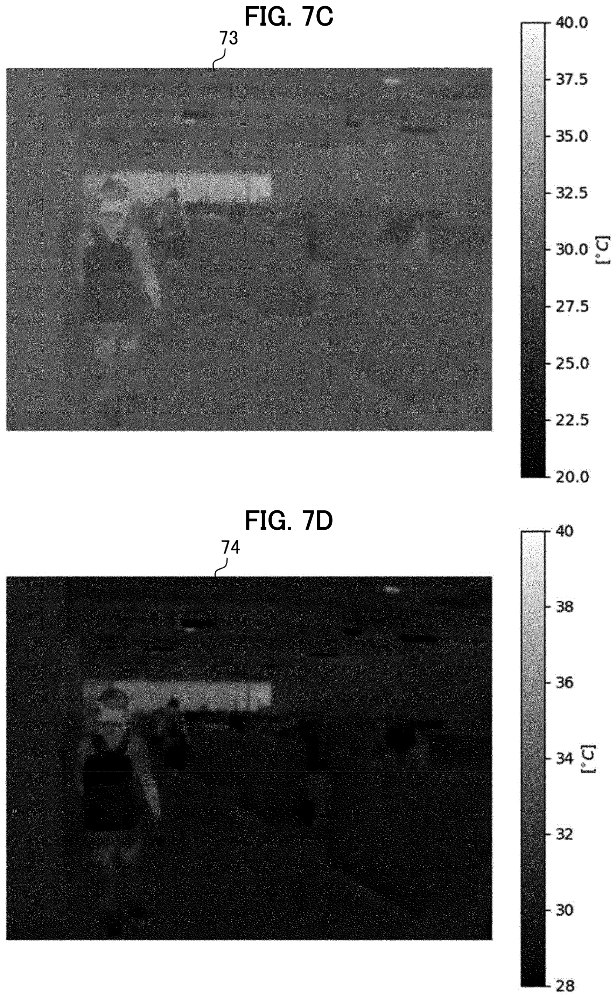

Fig. 7C illustrates the augmented image 73 generated with the temperature parameter set in the range of 20 [°C] to 40 [°C]. The image augmentation unit 40 assigns a luminance value of 0 to a pixel having an infrared rays detection signal of 20 [°C] or lower, and assigns a luminance value of 255 to a pixel having an infrared rays detection signal of 40 [°C] or higher. Then, the image augmentation unit 40 proportionally allocates the luminance value to the pixels of which the infrared rays detection signal is between 20 [°C] and 40 [°C].

FIG. 7D illustrates an augmented image 74 generated by setting the temperature parameter in the range of 28 °C to 40 °C. The image augmentation unit 40 assigns a luminance value of 0 to pixels for which the infrared rays detection signal is 28 [°C] or lower, and assigns a luminance value of 255 to pixels for which the infrared rays detection signal is 40 [°C] or higher. Then, the image augmentation unit 40 proportionally allocates the luminance value to the pixels of which the infrared rays detection signal is between 28 [°C] and 40 [°C].

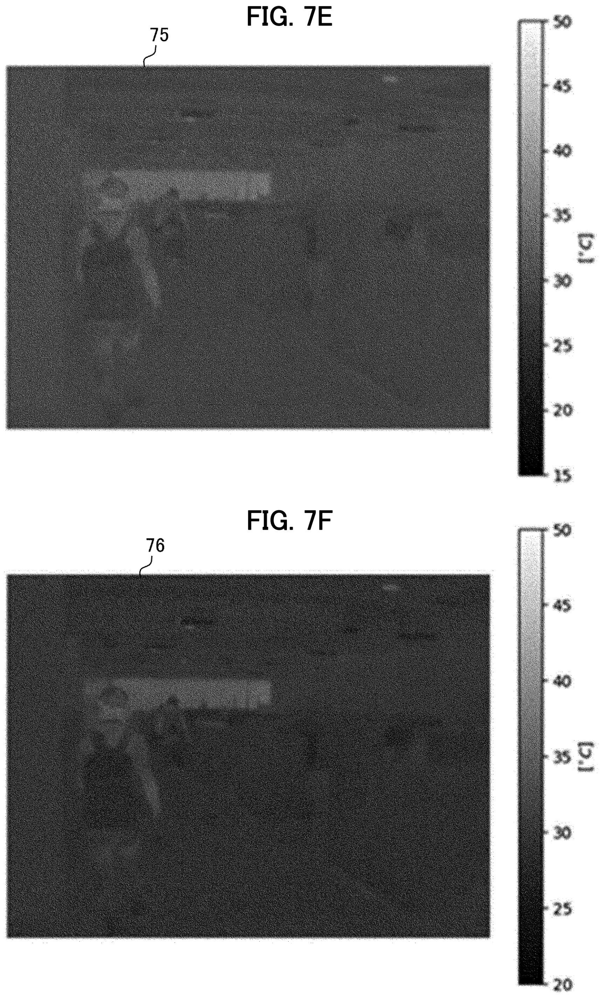

FIG. 7E illustrates an augmented image 75 generated by setting the temperature parameter in the range of 15 [°C] to 50 [°C]. The image augmentation unit 40 assigns a luminance value of 0 to a pixel having an infrared rays detection signal of 15 [°C] or lower, and assigns a luminance value of 255 to a pixel having an infrared rays detection signal of 50 [°C] or higher. Next, the image augmentation unit 40 proportionally allocates luminance values to the pixels of which the detection signals of the infrared rays are between 15 [°C] and 50 [°C].

Fig. 7F illustrates the augmented image 76 generated with the temperature parameter set in the range of 20 [°C] to 50 [°C]. The image augmentation unit 40 assigns a luminance value of 0 to a pixel having an infrared rays detection signal of 20°C or lower, and assigns a luminance value of 255 to a pixel having an infrared rays detection signal of 50°C or higher. Then, the image augmentation unit 40 proportionally allocates the luminance value to the pixels of which the infrared rays detection signal is between 20 [°C] and 50 [°C].

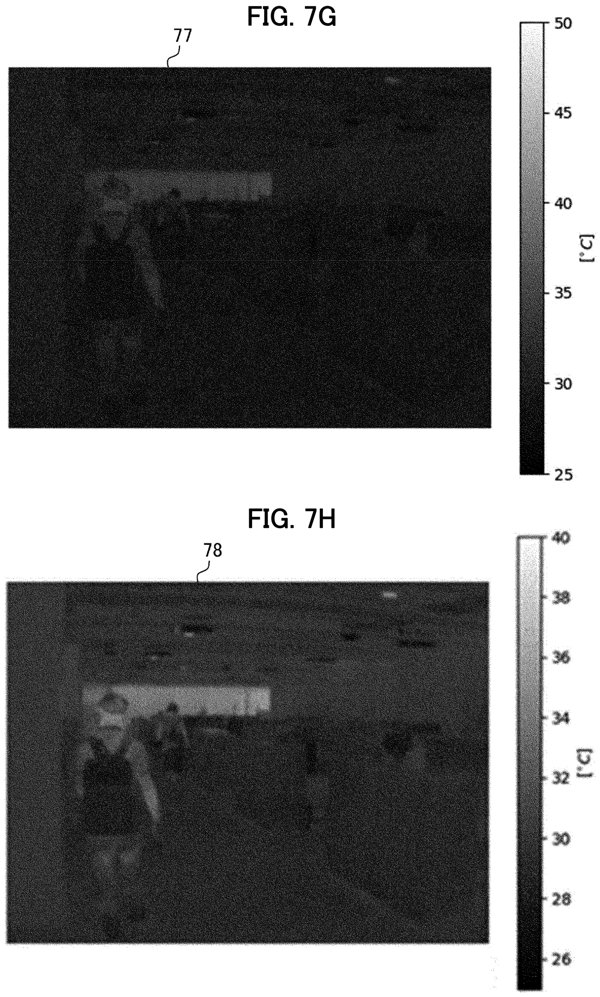

FIG. 7G illustrates an augmented image 77 generated by setting the temperature parameter in the range of 25°C to 50°C. The image augmentation unit 40 assigns a luminance value of 0 to a pixel having an infrared rays detection signal of 25 [°C] or less, and assigns a luminance value of 255 to a pixel having an infrared rays detection signal of 50 [°C] or more. Then, the image augmentation unit 40 proportionally allocates the luminance value to the pixels of which the infrared rays detection signal is between 25 [°C] and 50 [°C].

FIG. 7H illustrates an augmented image 78 generated by setting the temperature parameter in the range of 25°C to 40°C. The image augmentation unit 40 assigns a luminance value of 0 to a pixel having an infrared rays detection signal of 25°C or lower, and assigns a luminance value of 255 to a pixel having an infrared rays detection signal of 40°C or higher. The image augmentation unit 40 then assigns luminance values to the pixels corresponding to the infrared rays detection signals ranging from 25 [°C] to 40 [°C] in a proportional manner.

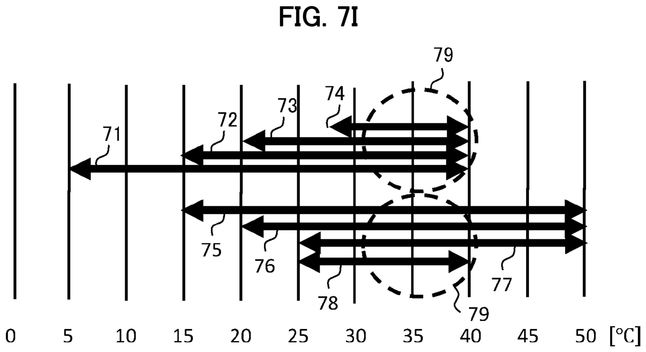

Fig 7I illustrates a concept when a temperature parameter in Figs. 7A to 7H is expressed in a temperature range.

All figures from Fig. 7A to Fig. 7H include the emphasis range 79, and augmented images (variation images) with various appearances are generated within a range of a visually recognizable dynamic range without impairing a temperature zone in which a target appears. Furthermore, since the processing is performed on the entire part of the images in Figs. 7A to 7H, the augmented images 71 to 78 in which both the foreground and the background are processed are generated.

### [Inference of image processing device (Second Embodiment)]

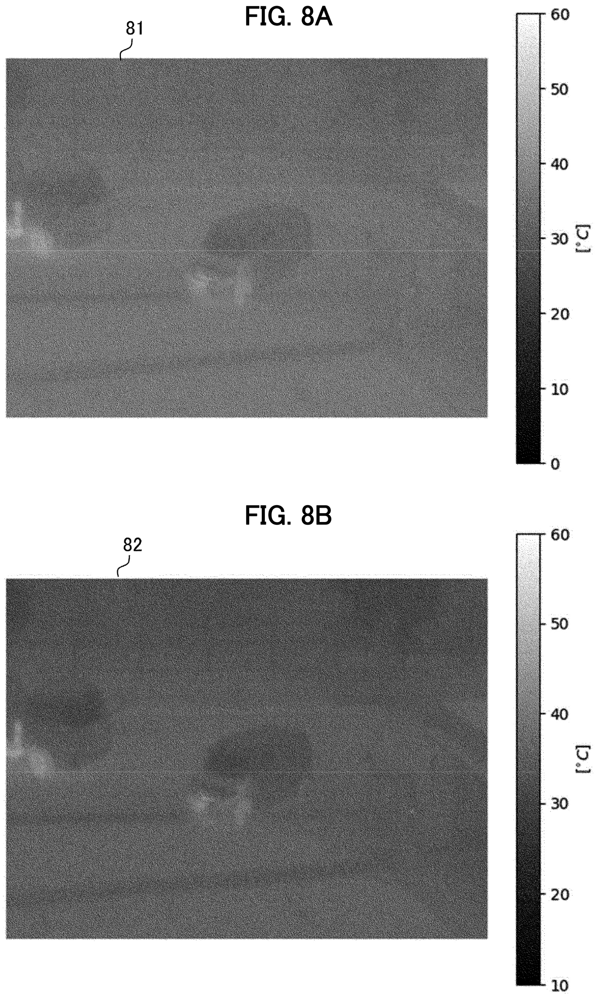

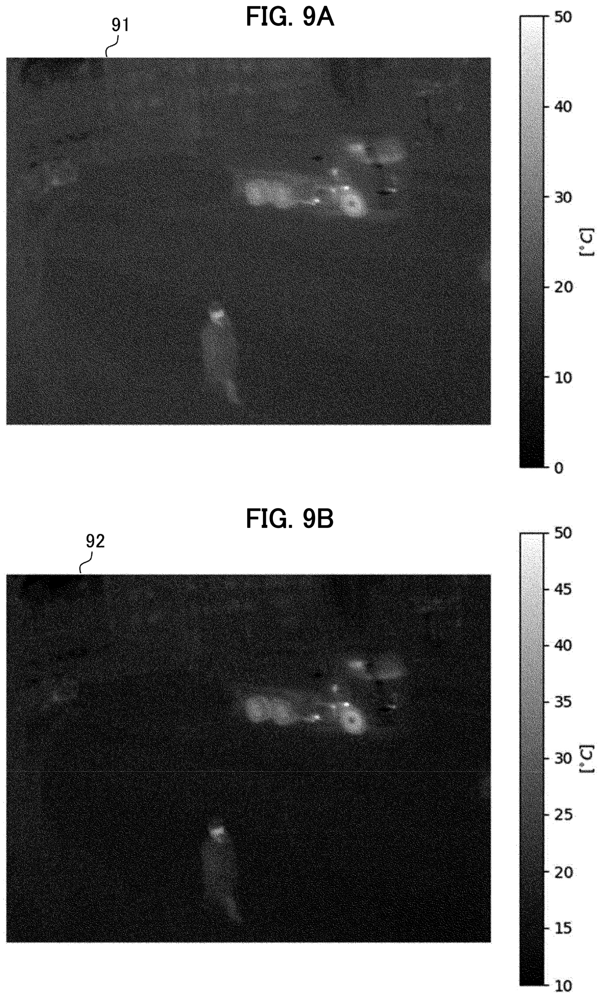

Next, processing of the image augmentation unit 40 of the image processing device 100 according to the second embodiment will be described. Figs. 8A to 8E and Figs. 9A to 9E are explanatory diagrams illustrating the concept of the image processing device 100 according to the second embodiment creating an augmented image to be used as an input image in the process of recognizing an object by a machine learning model.

The image augmentation unit 40 of the image processing device 100 changes the target range including the important range 89 with reference to the object-specific table 50, and generates an input image in which the visibility of the target object is improved. That is, the image augmentation unit 40 changes the dynamic range to generate the input images (the augmented images 81 to 84 and 91 to 94) corresponding to the situation of the operation environment.

For example, for a high-temperature vehicle, the image augmentation unit 40 sets, from the object-specific table 50, a temperature range of about 35 [°C] to about 53 [°C], which corresponds to the temperature of the vehicle, as the important range 89, and adjusts the dynamic range. The image augmentation unit 40 adjusts the dynamic range as a target range in accordance with an installation environment such as outdoors or indoors or a seasonal environment.

FIG. 8A illustrates an augmented image 81 generated by setting the temperature parameter in the range of 0 [°C] to 60 [°C] outdoors in summer.

FIG. 8B illustrates an augmented image 82 generated by setting the temperature parameter in the range of 10 [°C] to 60 [°C] outdoors in summer.

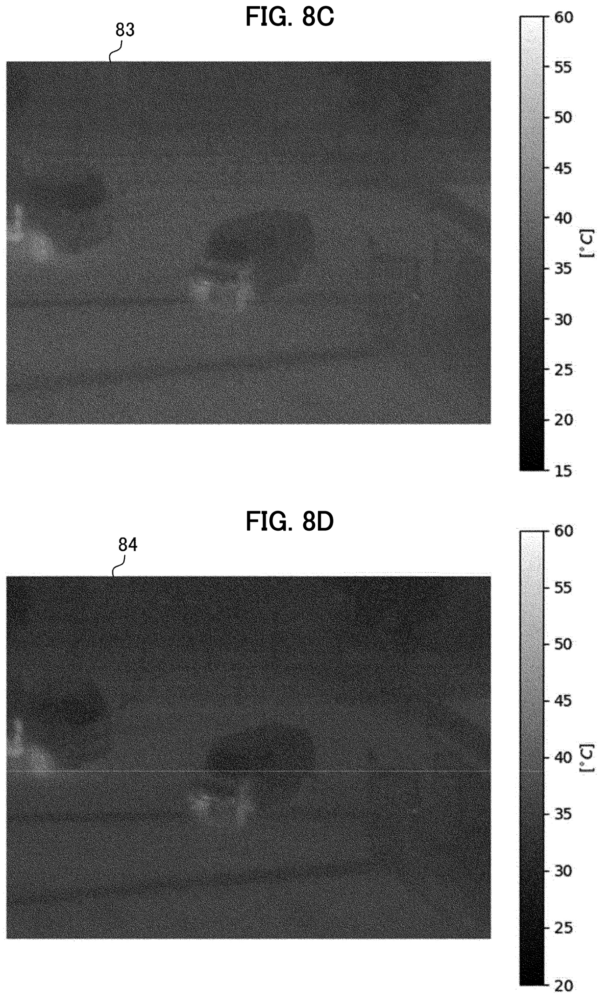

FIG. 8C illustrates an augmented image 83 generated by setting the temperature parameter in the range of 15 [°C] to 60 [°C] outdoors in summer.

FIG. 8D illustrates an augmented image 84 generated by setting a temperature parameter in a range from 20 [°C] to 60 [°C] outdoors in summer.

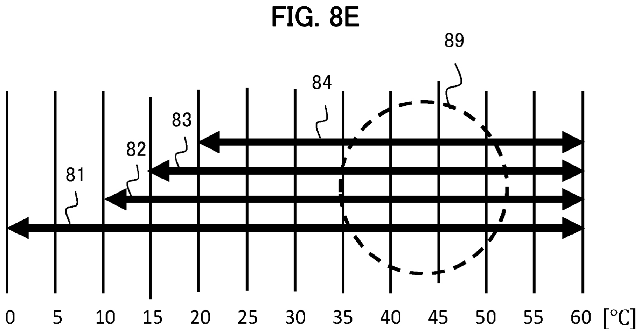

Fig. 8E illustrates a concept when a temperature parameter in Figs. 8A to 8D is set in a temperature range outdoors in summer with a vehicle as a target.

As illustrated in Fig. 8E, the augmented images 81 to 84 include an emphasis range 89, and adjust the visible dynamic range. For example, in the case of outdoors in a hot season, a low temperature is raised to cover an upper limit value of 60 [°C] so as to cover a high temperature range. Furthermore, the important range 89 is adjusted to about 35 [°C] to about 52 [°C].

In this case, the augmented image 81 is not appropriate as an input image because of its low contrast. On the other hand, the augmented image 84 has high contrast and an emphasized edge, and therefore is appropriate as an input image.

FIG. 9A illustrates an augmented image 91 generated by setting the temperature parameter in the range of 0 [°C] to 50 [°C] outdoors in winter.

FIG. 9B illustrates the augmented image 92 generated by setting the parameter of the temperature in the range of 10 [°C] to 50 [°C] outdoors in winter.

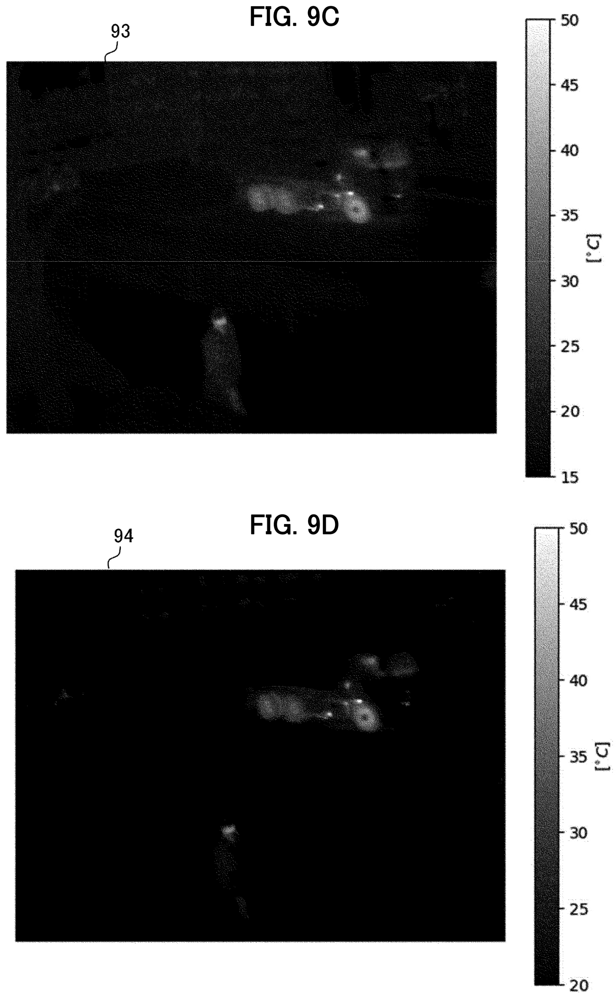

FIG. 9C illustrates an augmented image 93 generated by setting the parameter of the temperature in the range of 15 [°C] to 50 [°C] outdoors in winter.

FIG. 9D illustrates an augmented image 94 generated by setting the parameter of the temperature in the range of 20 [°C] to 50 [°C] outdoors in winter.

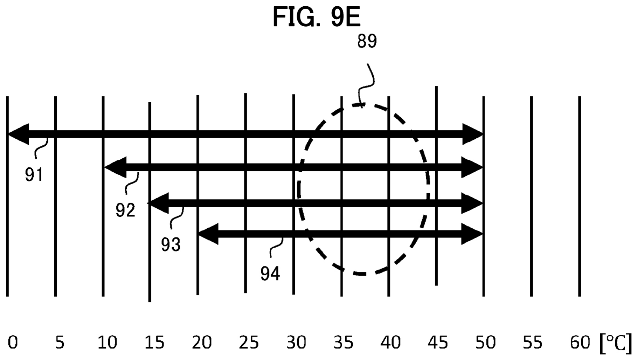

Fig. 9E illustrates a concept when a temperature parameter in Figs. 9A to 9D is set in a temperature range outdoors in winter with a vehicle as a target.

As illustrated in Fig. 9E, the augmented images 91 to 94 include the emphasis range 89 and adjust the visible dynamic range. For example, in the case of outdoors in a cold season, the high temperature side is lowered and the upper limit value is set to 50 [°C] so as to cover a low temperature range. The important range 89 is adjusted to about 30 [°C] to about 43 [°C].

In this case, the augmented image 94 is not appropriate as the input image because of its low contrast. On the other hand, the augmented image 92 has high contrast and an emphasized edge, and therefore is appropriate as an input image.

### [During machine learning/Inference of image processing device (the third embodiment)]

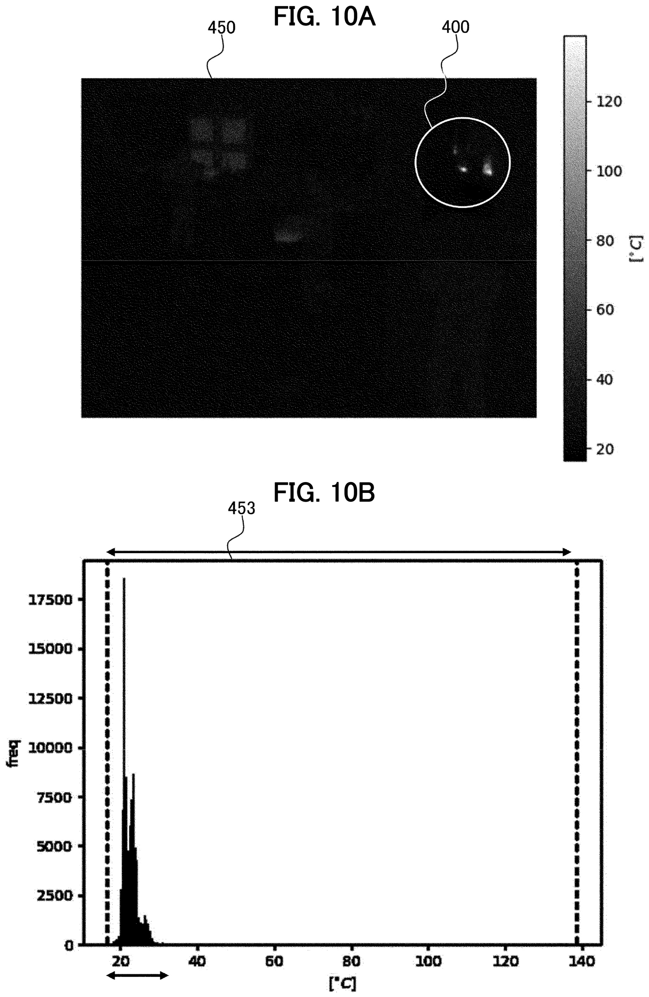

Next, processing performed by the image augmentation unit 40 in the image processing device 100 according to the third embodiment will be described. Fig. 10A to Fig. 10D are explanatory diagrams illustrating an example in which the image processing device 100 according to the third embodiment adjusts the target range using the percentile and performs detection of a target when generating an augmented image indoors.

The percentile is a method in which the distribution of the measurement values is rearranged from a small number to a large number, and the measurement values rearranged from the small number to the large number are normalized as to where the measurement values are located by displaying the measurement values in percentage.

The image augmentation unit 40 of the third embodiment rearranges the detection signal of the infrared rays in each pixel, and sets a range between percentiles X to Y as a target range. Here, for example, the percentile of 10% to 90% means that 10% to 90% from the smallest number in the distribution of measurement values is set as a target range.

The image augmentation unit 40 of the image processing device 100 normalizes the range of the percentiles X to Y as a target range using the histogram of the detection signals of infrared rays. Thus, outliers of X% or less and Y% or more can be removed to improve the visibility.

Fig. 10A illustrates an infrared image 450 in which a high-temperature device that is an object is displayed in an area 400 indoors. The infrared image 450 in FIG. 10A indicates a temperature range of about 20 [°C] to about 140 [°C].

Fig. 10B illustrates a histogram 453 of the infrared image 450 illustrated in Fig. 10A. The horizontal axis represents temperature [°C], and the vertical axis represents frequency [freq]. In the histogram 453 in Fig. 10B, the frequency of the detection signal increases in a range from about 18 [°C] to about 30 [°C]. Therefore, the image augmentation unit 40 can improve the visibility of the infrared image by adjusting the infrared image 450 with the range of the percentiles X to Y as the target range.

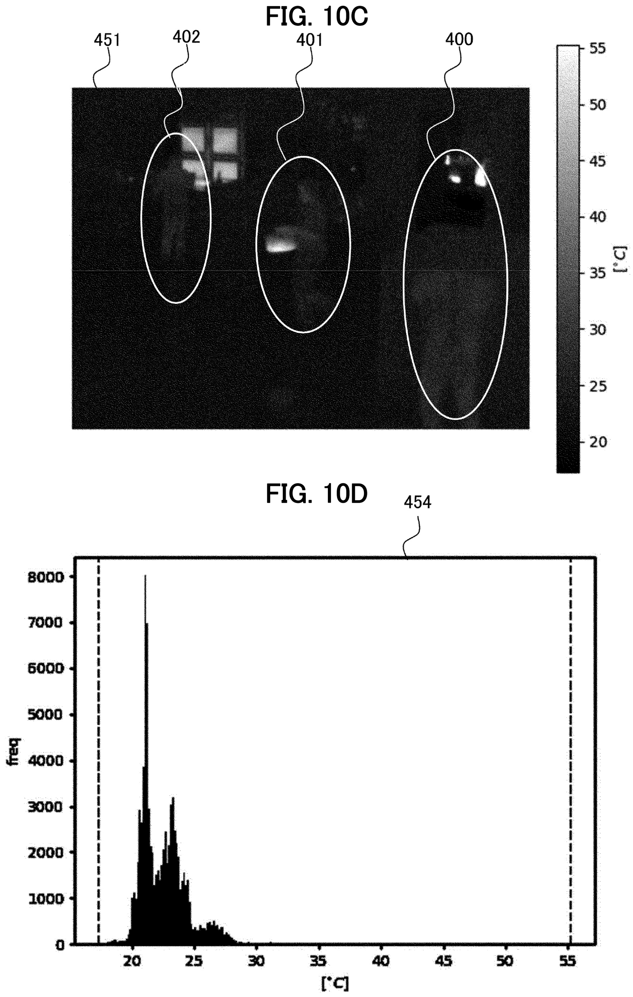

Fig. 10C illustrates an augmented image 451 in which the target range of the temperature of the infrared image 450 in Fig. 10A is normalized from about 20 [°C] to about 55 [°C]. In the augmented image 451 illustrated in Fig. 10C, specific objects are displayed in the areas 400, 401, and 402. A person having a high-temperature device is displayed in the area 400, a person carrying luggage is displayed in the area 401, and a person in front of a shower room is displayed in the area 402.

Fig. 10D illustrates a histogram 454 in which the target range of the temperature shown in Fig. 10B is normalized from about 18 [°C] to about 55 [°C].

In this way, the image augmentation unit 40 creates the histogram of the detection signals and adjusts the target range of the temperature with the percentiles X to Y. As a result, it is possible to remove outliers of X% or less and Y% or more, and thus it is possible to easily visually recognize information in which information of the target object is buried by simple normalization.

Note that in the present embodiment, the values of the percentiles X to Y are parameter widths. The image augmentation unit 40 can increase variations of the augmented image used for machine learning by setting the parameter width randomly or in a round-robin manner. In addition, the image augmentation unit 40 may set Y, which is the upper limit value of the parameter width, to be low at the time of inference, and thus, for example, it is possible to easily perform detection of an object having a relatively low temperature in an environment in which a high-temperature device is installed. In this way, the image augmentation unit 40 can adjust the temperature range of the target range in accordance with the parameter width.

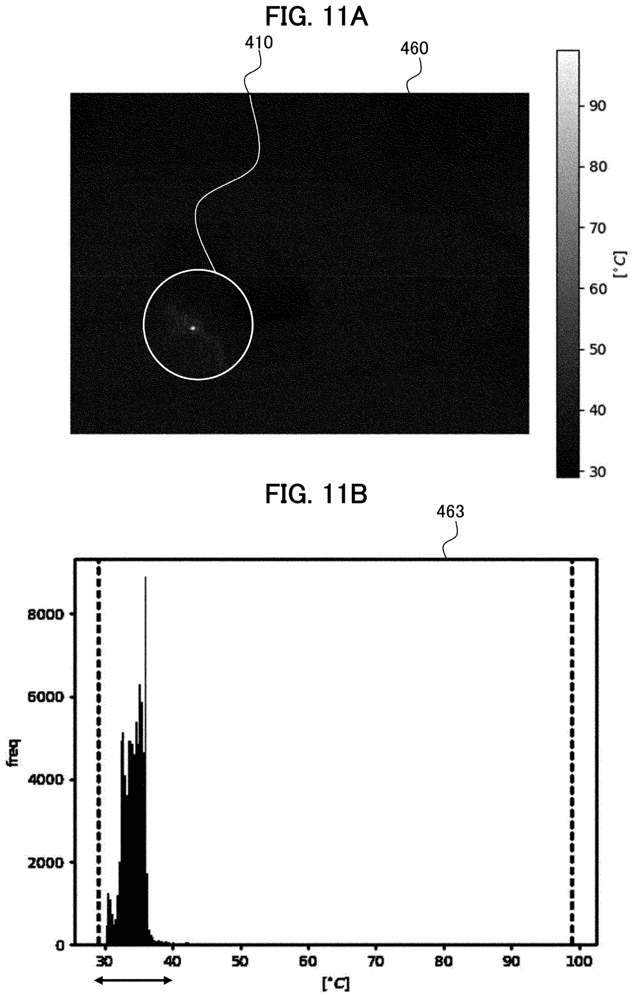

Figs. 11A to 11D are explanatory diagrams illustrating an example in which the image processing device 100 according to the third embodiment adjusts the target range using the percentile when generating an augmented image and performs detection of a target object outdoors.

The image augmentation unit 40 of the image processing device 100 normalizes the range of the percentiles X to Y as a target range using the histogram of the infrared rays detection signals outdoors in a similar manner. Thus, outliers of X% or less and Y% or more can be removed to improve the visibility.

FIG. 11A illustrates an infrared image 460 in which a high-temperature portion of a car, which is an object, is displayed in an area 410 outdoors.

Fig. 11B illustrates a histogram 463 of the infrared image in Fig. 11A. The horizontal axis represents temperature [°C], and the vertical axis represents frequency [freq]. In the histogram 463 in Fig. 11B, the frequency of the detection signal increases in a range from about 30 [°C] to about 40 [°C]. Therefore, the image augmentation unit 40 can improve the visibility of the infrared image by adjusting the infrared image 460 with the range of the percentiles X to Y as the target range.

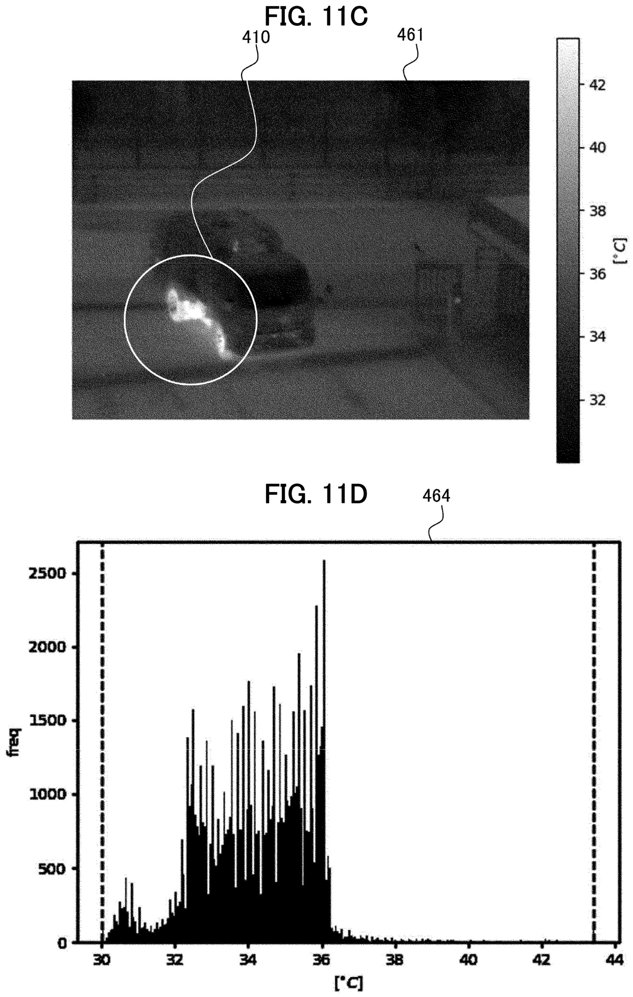

Fig. 11C illustrates an augmented image 461 in which the target range of the temperature of the infrared image 460 in Fig. 11A is normalized from about 30 [°C] to about 44 [°C]. In the augmented image 461 in Fig. 11C, a specific object is displayed in an area 410. An engine part of the garbage collection vehicle is displayed in area 410.

Fig. 11D illustrates a histogram 464 in which the target range of the temperature of Fig. 11B is normalized from about 30 [°C] to about 44 [°C].

In this way, the image augmentation unit 40 generates the histogram of the detection signals and adjusts the target range of the temperature with the percentiles X to Y similarly in the outdoor case. As a result, it is possible to remove outliers of X% or less and Y% or more, and thus it is possible to easily visually recognize information in which information of the target object is buried by simple normalization.

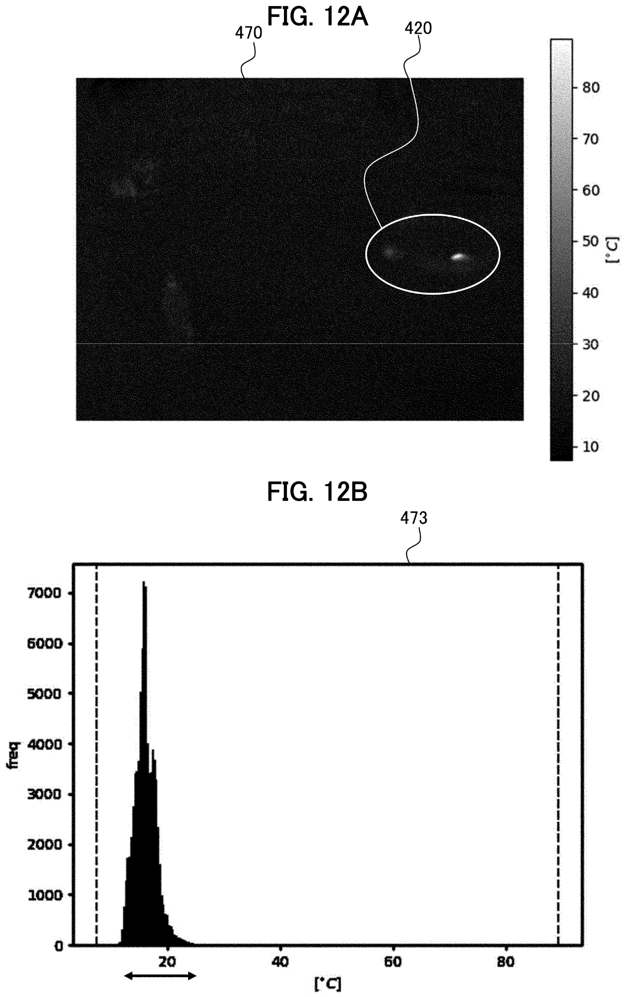

Fig. 12A to Fig. 12D are explanatory diagrams illustrating an example in which the image processing device 100 according to the third embodiment adjusts the target range using the percentile when generating an augmented image and performs detection of a target in a cold outdoor environment.

The image augmentation unit 40 of the image processing device 100 similarly performs normalization in the range of the percentiles X to Y using the histogram of the detection signals of the infrared rays even in a cold outdoor environment. Thus, outliers of X% or less and Y% or more can be removed to improve the visibility.

Fig. 12A illustrates an infrared image 470 in which a high-temperature portion of a car that is an object is displayed in an area 420 in a cold outdoor environment. The infrared image 470 in Fig. 12A indicates a temperature range of about 10 [°C] to about 90 [°C].

Fig. 12B illustrates a histogram 473 of the infrared image of Fig. 12A. The horizontal axis represents temperature [°C], and the vertical axis represents frequency [freq]. In the histogram 473 in Fig. 12B, the frequency of the detection signal increases in a range from about 10 [°C] to about 25 [°C].

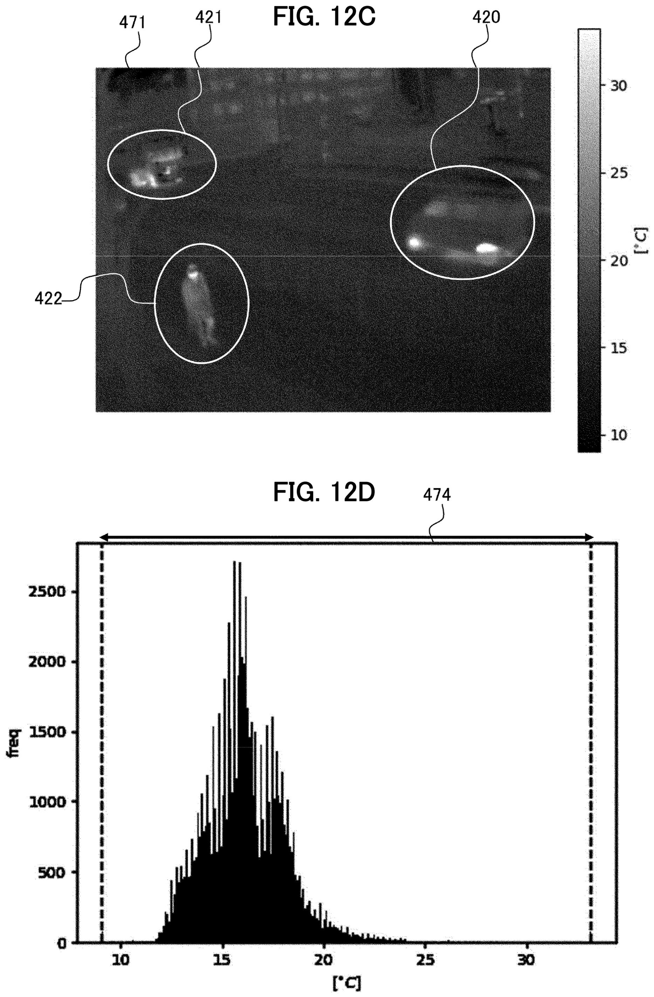

Fig. 12C illustrates an augmented image 471 in which the temperature range of the infrared image 470 in Fig. 12A is normalized to the target range from about 10 [°C] to about 35 [°C]. In the augmented image 471 in Fig. 12C, specific objects can be visually recognized in areas 420, 421, and 422. A running vehicle is visually recognized in the area 420, an oncoming vehicle is visually recognized in the area 421, and a pedestrian is visually recognized in the area 422.

Fig. 12D illustrates a histogram 474 in which the target range of the temperature of Fig. 12B is normalized from about 9 [°C] to about 33 [°C].

In this way, the image augmentation unit 40 changes and normalizes the target range of the temperature of the infrared image 470 in Fig. 12A in the range of the percentiles X to Y using the histogram of the detection signals of the infrared rays. Similarly, even in the case of a cold outdoor environment, the image augmentation unit 40 can remove outliers of X% or less and Y% or more by adjusting the target range in the range of the percentiles X to Y. Therefore, it is possible to easily visually recognize information in which information of the target object could be buried by simple normalization.

### [During machine learning of image processing device (the third embodiment)]

The image augmentation unit 40 of the image processing device 100 according to the third embodiment imparts a predetermined contrast to an image area in which a specific object is present when an infrared image is created. In this case, the image augmentation unit 40 may use the outside of the image area as a background image and impart different contrasts to the background image to generate the plurality of infrared images.

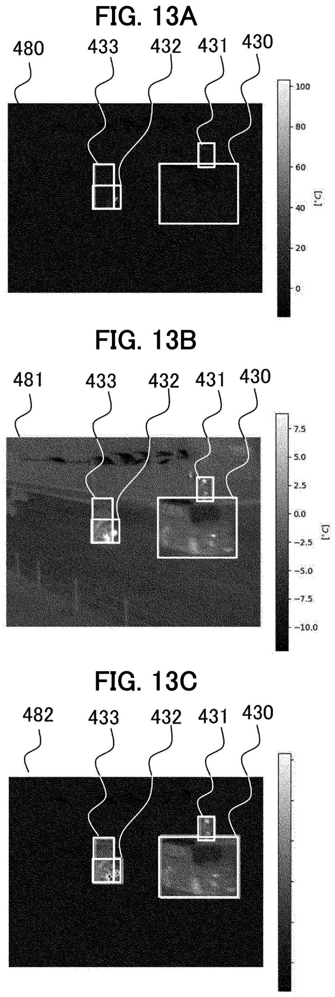

Figs. 13A to 13C are explanatory diagrams illustrating an example in which the image augmentation unit 40 of the image processing device 100 according to the third embodiment generates, in a rectangle, an infrared image in which an image area in which a specific target object is present is provided with a predetermined contrast.

In Fig. 13A, the image augmentation unit 40 sets the ground truth rectangles 430 to 433 of the target in the infrared image 480. Since the image processing device 100 includes the ground truth data generation processing unit 31, the image augmentation unit 40 is allowed to set a rectangle as ground truth data (referred to as a ground truth rectangle). with the ground truth data generation processing unit 31. Note that the infrared image 480 is set to have a temperature target range of about-10 [°C] to about 100 [°C].

With reference to the object-specific table 50, the image augmentation unit 40 generates, in the rectangle, an augmented image 481 (infrared image) in which an image area where a specific target object exists is provided with a predetermined contrast.

In Fig. 13B, the image augmentation unit 40 adjusts the target range of the temperature of the infrared image 480 from about-12.5 [°C] to about 8 [°C], so that the augmented images 481 of the important ranges in the ground truth rectangles 430 to 433 are appropriately displayed. That is, as illustrated in Figure 13B, the image augmentation unit 40 appropriately sets the target range of temperature, thereby generating the augmented image 481 in which the ground truth rectangles 430 to 433 are provided with a predetermined contrast.

Note that the image augmentation unit 40 sets a target range of temperature, or sets a temperature range by a predetermined range of percentile, and generates the augmented image 481 with contrast. Thus, with reference to the object-specific table 50, the image augmentation unit 40 can generate the augmented image 481 in which the temperature range corresponding to the target object in the ground truth rectangles 430 to 433 is set.

In Fig. 13C, the image augmentation unit 40 generates, as a background image, an augmented image in which the augmented image 481 in which the ground truth rectangles 430 to 433 are contrasted is combined with the augmented image 482 in which various temperature ranges are set. The image augmentation unit 40 can set the outside of the rectangle as a background image and generate an augmented image 482 in which a plurality of temperature ranges are set in the background image.

Thus, the image augmentation unit 40 can combine the augmented image 481 of the ground truth rectangles 430 to 433 with contrast with the augmented images 482 serving as the background image having various variations, thereby generating various augmented images for use in machine learning.

### <Action and Effect >

As described above, the image processing device 100 according to the first embodiment includes the image augmentation unit 40. The image augmentation unit 40 creates, from an infrared image capturing a target, an augmented image to be used as training data for creating a machine learning model, on the basis of information on the target in the standard table 20.

As a result, the image processing device 100 according to the first embodiment can create an augmented image to be used as training data for creating a machine learning model based on the information of the target object using the infrared image obtained by capturing the target object. Therefore, the image processing device 100 according to the first embodiment can increase the variation of training data.

Further, the image processing device 100 according to the first embodiment may give a predetermined contrast to the range of the infrared information in which the specific object may exist when creating the augmented image by the image processing device 40. In addition, the image processing device 100 according to the first embodiment may generate a plurality of infrared images in which different contrasts are given to a range of infrared rays information in which a specific target object may be present when an infrared image is created by the image augmentation unit 40.

In addition, the image processing device 100 according to the second embodiment includes an image augmentation unit 40. The image augmentation unit 40 creates an augmented image to be used as an input image in processing for recognizing an object by a machine learning model.

Thus, the image processing device 100 according to the second embodiment can create an augmented image to be used as an input image in recognition processing of a target object by a machine learning model by referring to the object-specific table 50. Therefore, the image processing device 100 according to the second embodiment can sharpen the input image used in the inference, and can improve the detection performance of the object in the infrared image.

Further, the image processing device 100 according to the second embodiment may give a predetermined contrast to the range of the infrared information in which the specific target may exist when generating the input image used in the process of recognizing the target by the image augmentation unit 40. In addition, the image processing device 100 according to the second embodiment may give contrast to an image area in which a specific target is present when an input image used in processing for recognizing a target is generated by the image augmentation unit 40.

The image processing device 100 according to the third embodiment further includes an image augmentation unit 40, a training data database 60, and an inference unit 70.

The image processing device 100 according to the third embodiment is a combination of the image processing device 100 according to the first embodiment and the image processing device 100 according to the second embodiment.

Thus, the image processing device 100 according to the third embodiment may assign, by the image augmentation unit 40, a predetermined contrast to an image area where a specific object is present in creating an infrared image. In the image processing device 100 according to the third embodiment, when an infrared image is created by the image augmentation unit 40, the outside of the image area may be set as a background image and different contrasts may be given to the background image.

### (Modification example)

The present invention is not limited to the above-described embodiment, and modifications can be implemented without departing from the spirit of the present invention, and for example, there are the following (a) to (e).

(a) The object in the first to third embodiments may be a solid having a specific temperature. For example, a warm-blooded animal such as a human, a pet, or a domestic animal, or a vehicle falls under the category.
(b) The information on the object in the first to third embodiments may be a temperature range in which a particular object may exist.
(c) The information of the target object in the first to third embodiments may be an image area in which a specific target object exists.
(d) The image processing device 100 according to the first embodiment to the third embodiment may further include the learning process unit 110 that performs machine learning using training data.
(e) The edge device 200 may include the inference model 120 machine-learned by the image processing device 100 including the image augmentation unit 40 that creates, from an infrared image obtained by imaging a target, an augmented image to be used as training data for creating a machine learning model or to be used as an input image in recognition processing of the target by the machine learning model, based on information on the target, and the learning process unit 110 that performs machine learning using the training data, and the inference process unit 210 that infers the target by applying the augmented image created by the image augmentation unit 40 to the inference model 120.

In this case, the edge device 200 according to the third embodiment includes an inference process unit 210 and an inference model 120. The inference process unit 210 includes a data processing unit 211 and generates a contrasted input image for the input data 280 by the function illustrated in the image augmentation unit 40 in Fig. 2. As a result, the inference process unit 210 performs inference on the input image to which the contrast has been added by using the inference model 120.

The inference model 120 is a model obtained by machine learning performed by the image processing device 100 including the image augmentation unit 40 that generates, from an infrared image obtained by imaging a target, an augmented image to be used as training data for generating a machine learning model or to be used as an input image in processing for recognizing the target by the machine learning model, based on information on the target, and the learning process unit 110 that performs machine learning using the training data.

Accordingly, the edge device 200 according to the third embodiment includes the inference process unit 210 and the inference model 120, and thus it is possible to improve the performance of detecting an object in an infrared image.

### Description of reference signs

10 Image generation unit
20 Standard table
31 Ground truth data generation processing unit (Identifying unit)
40 Image augmentation unit
50 Object-specific table
60 Training data database
70 inference unit
100, 150 Image processing device
110 Learning process unit
111 Data augmentation unit
120 Inference model
200 Edge device
210 Inference process unit
211 Data processing unit
280 Input data
290 Recognition result
300 Infrared camera

## Claims

1. An image processing device comprising:
an image augmentation unit that creates, from a detection signal of infrared rays used to image a target, an augmented image based on information on the target, wherein the augmented image is usable as training data for creating a machine learning model or is usable as an input image in processing for recognizing the target by the machine learning model.

2. The image processing device according to claim 1, wherein the target is a solid having a specific temperature.

3. The image processing device according to claim 1, wherein the information on the target is a temperature range in which a specific target can exist.

4. The image processing device according to claim 1, wherein the information on the target is an image area in which a specific target is present.

5. The image processing device according to claim 1, wherein when creating the augmented image, the image augmentation unit applies a predetermined contrast to a range of the infrared information in which a specific object may exist.

6. The image processing device according to claim 1, wherein the image augmentation unit generates a plurality of augmented images in which different contrasts are given to a range of infrared information in which a specific target object may exist.

7. The image processing device according to claim 1, further comprising:
an image generation unit that generates an infrared image from a detection signal of infrared rays used to image the target; and
a specifying unit that specifies an image area in which a specific target exists based on the infrared image, wherein
the image augmentation unit gives a predetermined contrast to the image area in which the specific target exists when creating the augmented image.

8. The image processing device according to claim 7, wherein when creating the augmented image, the image augmentation unit sets an outside of the image area as a background image and provides the background image with different contrasts.

9. The image processing device according to claim 1, further comprising a learning unit that performs machine learning using the training data.

10. The image processing device according to claim 1, wherein the image augmentation unit applies a predetermined contrast to a range of infrared information in which a specific target object may exist when generating the input image used in a process of recognizing the target object.

11. The image processing device according to claim 7, wherein, when generating the input image to be used in a processing of recognizing the target, the image augmentation unit gives a predetermined contrast to an image area in which a specific target exists.

12. An edge device comprising:
an inference model that has undergone machine learning by an image processing device including:
an image augmentation unit that generates, from a detection signal of infrared rays used to image a target
an augmented image based on information on the target, wherein the augmented image is used as training data for generating a machine learning model or is used as an input image in a process of recognizing the target by the machine learning model; and
a learning process unit that performs machine learning using the training data; and
an inference process unit that infers the target by applying the augmented image generated by the image augmentation unit to the inference model.

13. An image generation method comprising: generating, from a detection signal of infrared rays used to image a target, an augmented image based on information on the target, wherein the augmented image is usable as training data for generating a machine learning model or is usable as an input image in processing for recognizing the target by the machine learning model.

14. An image generation program which allows a computer to perform: creating, from a detection signal of infrared rays that have imaged a target, an augmented image based on information on the target, wherein the augmented image is usable as training data for creation of a machine learning model or is usable as an input image in recognition processing of the target by the machine learning model.
